# EUROPEAN PATENT APPLICATION

(11) **EP 1 524 801 A2**
(43) Date of publication of application: **20.04.2005**
(21) Application number: 04256169.6
(22) Date of filing: 06.10.2004
(51) Int. Cl.: H04L 12/28, H04Q 7/38

(54) **Method of establishing a communication link between a mobile terminal and a wireless local area network (WLAN)**

(30) Priority: 16.10.2003 GB 0324217
(71) Applicant: Siemens AG, 80333 München (DE)
(72) Inventor: Hancock, Robert, Southampton SO18 1NW (GB); Hepworth, Eleanor, Southampton SO14 6HZ (GB); Mccann, Stephen, Rowhams Southampton SO16 8LT (GB); Surtees, Abigail, Romsey Hampshire SO51 7UB (GB)
(74) Representative: Payne, Janice Julia

(57) **Abstract**

A method of establishing a communication link between a local network (5) and a mobile terminal (6) comprises a number of steps. At the mobile terminal a network access identifier is transmitted to the local network, including information from which at least one communication protocol to be used in establishing the link is derivable. At the local network the at least one communication protocol is derived, responding to the network access identifier by attempting to establish communication using the at least one indicated protocol.

## Description

This invention relates to a method of establishing a communication link between a local network and a mobile terminal.

Mobile telecommunications permit the use of portable devices (referred to as mobile terminals) such as lap-top, palm-top computers, personal digital assistants or mobile telephones in diverse environments such as airport lounges, train stations or cafés to connect to a home telecommunications network via a local network. The local network will be a Local Area Network or LAN installed by the proprietor of the establishment concerned for the benefit of visitors and for the generation of additional income based on its use.

The way in which the device connects to the LAN may involve a hardwire link via a port to which the user connects the device or via wireless means involving radio waves or infra red in the case of a wireless LAN (WLAN). Some networks may support a variety of connectivity. The functionality offered by the network will in the most part be concerned with connecting the user to the Internet for browsing, and other networks for the purpose of receiving or sending emails or to networks for voice or data communication. The network is therefore often referred to as an access network because of this.

It is desirable that users are able to use the access network without having to undertake any formalities such as direct payment to the proprietor. In order to do this and to enable the proprietor to gain some financial benefit it is proposed that the users home network sends payment to the proprietor. For this to occur it is necessary for the home network operator and the proprietor to have a relationship of trust. In essence, an agreement will be in place to guarantee payment for the use of the access network by the user with the user paying the home network operator. These agreements are known as trust relationships.

The way in which the access network is used by the user is recorded in an authentication, authorisation and accounting (AAA) entity with the access network. This data is transmitted to the home network operator and charged to the user's account. To be authorised to operate on the access network, the mobile terminal transmits a Network Access Identifier (NAI) when it has detected the presence of a network. This is configured to provide an identifier of the user and the name of the home network.

The present invention arose from an inventive realisation by the inventors that the network access identifier may be usefully used to better configure the link from the access network to the mobile terminal.

Accordingly, the invention provides a method of establishing a communication link between a local network and a mobile terminal comprising the steps of: at the mobile terminal, transmitting a network access identifier, including information from which at least one communication protocol to be used in establishing the link is derivable, to the local network; and, at the local network, deriving the at least one communication protocol, responding to the network access identifier by attempting to establish communication using the at least one indicated protocol.

By providing an indication in the network access identifier of an appropriate communication protocol to use and then establishing that link in accordance with that protocol the link will be the most efficient and reliable for the particular mobile terminal. In this way, the network access identifier serve a dual purpose, one being to identify the user and the user's home network and the other being to identify the most effective link protocol.

Preferably, the network access identifier includes information indicating at least one subscriber network to which a user of the mobile terminal subscribes.

Preferably, the information from which the at least one protocol is derived is a protocol identifier.

The mobile terminal may have the capability to use more than one protocol and in that case the terminal may indicate a preferred one of those supported. In some arrangements, more than one protocol may be indicated from which the access network may chose. An order of preference may also be given by the mobile terminal.

Preferably, use of the local network by the user is billed to the operator of the subscriber network.

Preferably, use of the local network by the user is billed to a subscriber account held by the user at the subscriber network.

Preferably, use, at least in part of the local network, by the user, is permitted after a verification process involving the network to which the user subscribes.

An example of a method of establishing a communication link according to the present invention will now be described with reference to the accompanying drawings in which:
Figure 1 shows a communications network and a mobile terminal operating in accordance with the invention; and
Figure 2 shows an access node of the network shown in Fig. 1 used to establish a communication link between the network and the mobile terminal.

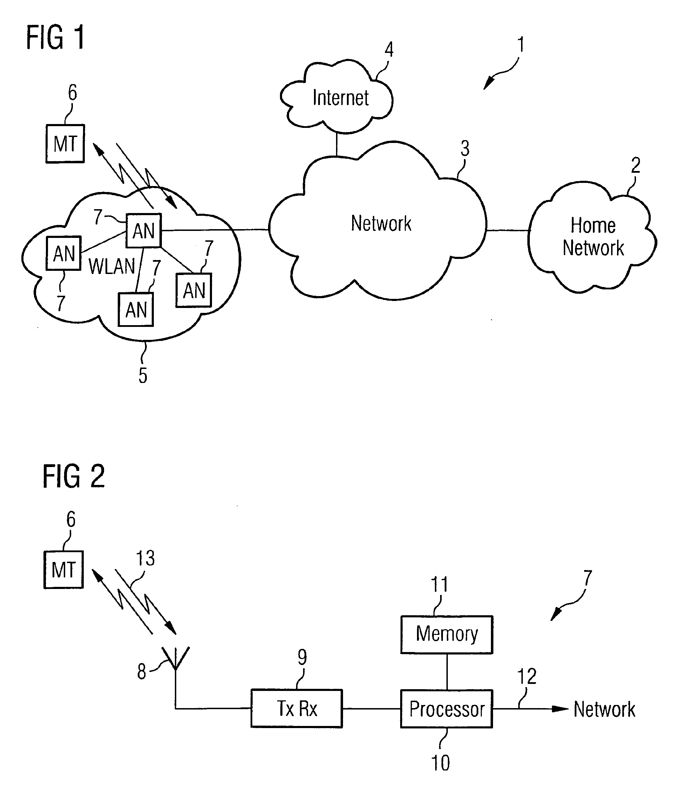

As is shown in Fig. 1, a communications network 1 comprises a home network 2, a general public switched telephony communications network 3, the Internet 4, a wireless local area network (WLAN) 5, and a mobile terminal 6.

The networks are interlinked as shown and the mobile terminal 6 is associated with the home network 2 to which a user of the terminal subscribes. The home network includes the home location register for the mobile terminal and the operator of the network bills the user for its use.

The WLAN 5 serves an area within a business premises, in this case an airport. The WLAN 5 includes a number of access nodes 7. These are positioned in the premises to ensure adequate coverage and they enable the mobile terminal 6 to access the WLAN 5 and hence the Internet 4, network 3 and or the home network 2.

Fig. 2 shows one of the network access nodes 7 in greater detail. It includes an antenna 8, a transmitter and receiver section 9, a processor 10, a memory 11 and a link 12 to the rest of the WLAN nodes.

The node 7 is conventional in nature, operating under control of the processor 10 to provide the required functionality in accordance with a control program held in memory 11. The node and the mobile terminal interact over a communications link 13.

The way in which the link is established will now be described.

One of the access nodes adopts the additional role of network controller and it periodically transmits, on a predetermined channel, a message advertising the presence of the network and information concerning the frequency of an access request channel. If a user of the mobile terminal switches the terminal on, the option to use the local network will be drawn to the user's attention by, for example, a screen prompt or an audio alert. Upon selection of the option, the mobile terminal will move to the access request channel and transmit a channel request and a network access identifier.

The network access identifier (NAI) provides a user identifier, a home network identifier and at least one preferred communication protocol. This is received by the access node via the antenna 8, the TX/RX section 9 and processed by the processor 10. The processor 10 identifies from the NAI the desired protocol to be used for the communication across the link 13 to be established on the allocated channel and communication is then established using that protocol.

The network management function whether operated by the particular access node or another node by means of the link 12, then establishes communication to the identified home network 2 to ensure that the particular user is still a valid subscriber before any services requiring payment are provided. If verified by the home network 2 the services offered by the WLAN 5 are enabled for the mobile terminal 6.

At the end of the session, the WLAN operator sends a charge to the home network operator and this is allocated to the user's regular account. Settlement is then made to the WLAN operator in accordance to the terms of business and the user billed in the usual manner.

## Claims

1. A method of establishing a communication link between a local network and a mobile terminal comprising the steps of: at the mobile terminal transmitting a network access identifier, including information from which at least one communication protocol to be used in establishing the link is derivable, to the local network; and, at the local network deriving the at least one communication protocol, responding to the network access identifier by attempting to establish communication using the at least one indicated protocol.

2. A method according to claim 1, wherein the network access identifier includes information indicating at least one subscriber network to which a user of the mobile terminal subscribes.

3. A method according to claim 1 or claim 2, wherein the information from which the at least one protocol is derived is a protocol identifier.

4. A method according to claim 2 or 3, wherein use of the local network by the user is billed to the operator of the subscriber network.

5. A method according to claim 4, wherein use of the local network by the user is billed to a subscriber account held by the user at the subscriber network.

6. A method according to any preceding claim, wherein use, at least in part of the local network, by the user, is permitted after a verification process involving the network to which the user subscribes.
